# EUROPÄISCHE PATENTSCHRIFT

(11) **EP 3 124 171 B1**
(45) Veröffentlichungstag und Bekanntmachung des Hinweises auf die Patenterteilung: **16.10.2019**
(21) Anmeldenummer: 16185179.5
(22) Anmeldetag: 10.08.2012
(51) Int. Cl.: B23Q 3/155, B23Q 3/157

(54) **WERKZEUGMASCHINE MIT MASCHINENMAGAZIN UND HINTERGRUNDMAGAZIN**
MACHINE TOOL WITH MAGAZINE AND BACKGROUND MAGAZINE
MACHINE-OUTIL COMPRENANT UN MAGASIN DE MACHINE ET UN MAGASIN DE FOND

(30) Priorität: 09.09.2011 DE 102011113311
(43) Veröffentlichungstag der Anmeldung: 01.02.2017
(62) Teilanmeldung aus: 12744008.9
(73) Patentinhaber: Chiron-Werke GmbH & Co. KG, 78532 Tuttlingen (DE)
(72) Erfinder: Prust, Dirk, 78532 Tuttlingen (DE); Eppler, Claus, 72469 Meßstetten (DE)
(74) Vertreter: Witte, Weller & Partner Patentanwälte mbB

(56) Entgegenhaltungen:
- WO-A2-2006/050551
- DE-A1- 10 225 143
- DE-U1- 8 707 780

## Beschreibung

Die vorliegende Erfindung betrifft eine Werkzeugmaschine mit zumindest einer gegenüber einer Vorrichtung zum Halten von Werkstücken relativ in zumindest einer von drei Raumrichtungen verfahrbaren Werkzeugspindel, in die Werkzeuge zur Bearbeitung der Werkstücke einspannbar sind, mit einem Maschinenmagazin, in dem zum Einwechseln in die zumindest eine Werkzeugspindel vorgesehene Werkzeuge vorrätig gehalten werden, und mit einem Hintergrundmagazin, in dem zum Einwechseln in das Maschinenmagazin vorgesehene Werkzeuge vorrätig gehalten werden, wobei in dem Maschinenmagazin für die oder jede Werkzeugspindel nicht mehr als vier Speicherplätze zur Aufnahme von Werkzeugen vorgesehen sind, und das Maschinenmagazin ein Kettenmagazin mit einer Kette ist, an der die Speicherplätze angeordnet sind.

Eine Werkzeugmaschine der vorstehend genannten Art ist aus der WO 2006/050551 A2 bekannt.

Im Rahmen der vorliegenden Erfindung wird unter einer "in zumindest in einer von drei Raumrichtungen relativ zu einer Vorrichtung zum Halten von Werkstücken verfahrbaren Werkzeugspindel" eine Anordnung verstanden, bei der die Werkzeugspindel und das Werkstück relativ zueinander zumindest in einer der drei orthogonalen Raumachsen x, y und z verfahrbar sind. Wenn es sich bei der Werkzeugmaschine um eine so genannte Fahrständermaschine handelt, dann sind alle drei Bewegungsrichtungen in der Werkzeugspindel realisiert, diese wird also in x-, y- und z-Richtung auf das Werkstück zugestellt.

Dabei ist es jedoch auch möglich, eine oder zwei Bewegungsrichtungen, also insbesondere die x- und y-Richtung, in dem Werkstück zu realisieren.

Für die Realisierung der vorliegenden Erfindung ist es jedoch unerheblich, wie die Bewegungsachsen auf die Werkzeugspindel und das Werkstück verteilt werden.

Sofern alle drei Bewegungsrichtungen in der Werkzeugspindel realisiert sind, ist die Werkzeugmaschine vorzugsweise eine Fahrständermaschine mit vertikalachsiger Werkzeugspindel, die Werkzeugspindel wird also in vertikaler Richtung auf das Werkstück zugestellt. Es ist jedoch auch möglich, die Werkzeugspindel horizontal auszurichten, so dass die Zustellung horizontal erfolgt.

Ferner ist es möglich, entweder in der Werkzeugspindel und/oder in dem Werkstück weitere Schwenk- und Drehachsen anzuordnen.

Die Werkzeugmaschine kann dabei mit einer, 2 4 oder noch mehr Werkzeugspindeln ausgestattet sein, ohne den Rahmen und die Vorteile sowie Wirkungsweisen der vorliegenden Erfindung zu verlassen. Die mehreren Werkzeugspindeln werden vorzugsweise synchron zueinander verfahren, sie sind bevorzugt starr miteinander gekoppelt und dienen dann der zeit- und konturgleichen Bearbeitung von so vielen Werkstücken, wie werkzeugspindeln vorhanden sind..

Die vorliegende Erfindung geht aus von einer Werkzeugmaschine, in der sowohl ein Maschinenmagazin als auch ein Hintergrundmagazin vorgesehen sind.

Werkzeugmaschinen mit Werkzeugmagazinen sind aus dem Stand der Technik vielfach bekannt. Das Werkzeugmagazin ist dabei in der Regel an der Werkzeugmaschine angebracht und kann beispielsweise als Kettenmagazin oder als Tellermagazin ausgebildet sein.

In derartigen Werkzeugmagazinen werden unterschiedliche Werkzeuge bereitgehalten, die nacheinander in die Werkzeugspindel eingesetzt werden, um bestimmte Bearbeitungsvorgänge an einem Werkstück vorzunehmen. Der Werkzeugwechsel zwischen dem Werkzeugmagazin und der Werkzeugspindel, erfolgt dabei auf verschiedene Art und Weisen.

Aus der DE 197 24 635 A1 ist beispielsweise eine Werkzeugmaschine mit einem Hintergrundmagazin in Form eines Tellermagazins bekannt, bei der ein Doppelgreifer vorgesehen ist, der Werkzeuge zwischen dem Tellermagazin und dem Arbeitsraum der Werkzeugmaschine hin- und hertransportiert. Der Doppelgreifer entnimmt dabei ein Werkzeug aus dem Tellermagazin und wird mit diesem Werkzeug dann in den Arbeitsraum geschwenkt. Dort fährt die Werkzeugspindel im Pick-up-Verfahren den Doppelgreifer an, legt das aktuell in die Werkzeugspindel eingespannte Werkzeug in dem freien Greifer des Doppelgreifers ab, und ergreift dann das zuvor aus dem Tellermagazin in den Doppelgreifer eingelegte Werkzeug.

Zusätzlich zu dem Tellermagazin weist die bekannte Werkzeugmaschine noch ein an der Werkzeugmaschine angeordnetes Maschinenmagazin auf, aus dem ebenfalls Werkzeuge in die Werkzeugspindel gewechselt werden können. Das mittels des Doppelgreifers aus dem Tellermagazin in die Werkzeugspindel eingewechselte Werkzeug kann auf diese Weise mit Hilfe der Werkzeugspindel auch in dem Maschinenmagazin abgelegt werden.

Aus der DE 190 19 446 A1 ist eine weitere Werkzeugmaschine bekannt, bei der das Maschinenmagazin als Kettenmagazin ausgebildet ist. Zum Werkzeugwechsel wird das Kettenmagazin in den Arbeitsraum der Werkzeugmaschine geschwenkt, wo ein Werkzeugwechsel zu der Werkzeugspindel im Pick-up-Verfahren stattfindet.

Bei den insoweit beschriebenen Werkzeugmaschinen kann in dem jeweiligen Maschinenmagazin nur eine bestimmte Anzahl von Werkzeugen zwischengelagert werden, so dass es häufig erforderlich ist, das Werkstück auf eine andere Werkzeugmaschine umzuspannen, um hier Bearbeitungsvorgänge mit weiteren Werkzeugen durchführen zu können.

Die DE 197 24 635 A1 beschreibt in diesem Zusammenhang eine Werkzeugmaschine, bei der ein externes Werkzeugmagazin als Hintergrundmagazin vorgesehen ist, durch das weitere Werkzeuge bereitgestellt werden.

Eine ähnliche Konstruktion zeigt auch die DE 100 20 801 A1. Das Hintergrundmagazin ist als Regalmagazin ausgelegt, in dem eine sehr große Anzahl von Werkzeugen zwischengespeichert werden kann. An dem Regalmagazin ist eine Übergabevorrichtung vorgesehen, die Werkzeuge aus dem Regalmagazin entnimmt und zu einer gegenüber dem Regalmagazin ortsfesten Übergabeposition transportiert.

Diese Übergabeposition wird auch von einem schwenkbar am Maschinengestell gelagerten Doppelgreifer bedient, der in der Übergabeposition ein Werkzeug an die Übergabevorrichtung abgeben bzw. ein neues Werkzeug von der Übergabevorrichtung entnehmen kann. Mit diesem neuen Werkzeug schwenkt der Doppelgreifer dann in die Nähe des Arbeitsraumes der Werkzeugmaschine, wo er das neue Werkzeug für einen Werkzeugwechsel im Pick-up-Verfahren bereitstellt.

Wenn die Werkzeugspindel einen Bearbeitungsvorgang beendet hat, fährt sie zu der Spindelposition des Doppelgreifers und legt zunächst das bisher verwendete Werkzeug in dem freien Greifer ab. Danach ergreift die Werkzeugspindel das neu aus dem Regalmagazin herangebrachte Werkzeug und fährt wieder in den Arbeitsraum, wo mit dem neuen Werkzeug die Bearbeitung des Werkstückes fortgesetzt wird.

Die Zahl der bei dieser Konstruktion zur Verfügung stehenden Werkzeuge ist theoretisch beliebig groß, so dass durch das Hintergrundmagazin zusammen mit der Übergabevorrichtung und dem Doppelgreifer die bei Maschinenmagazinen aus Platzgründen vorhandene Problematik der limitiert zur Verfügung stehenden Werkzeuge beseitigt ist.

Die bekannte Konstruktion ist jedoch konstruktiv aufwändig, wobei der Werkzeugwechsel für viele Anwendungsfälle nicht schnell genug ist.

Davon ausgehend beschreibt die DE 102 25 143 A1 eine Werkzeugmaschine nach dem Oberbegriff des Anspruchs 1, die das Prinzip des Maschinenmagazins mit der zwar begrenzten Anzahl von gespeicherten Werkzeugen, dafür aber der schnellen Möglichkeit des Werkzeugwechsels kombiniert mit den Vorteilen des Hintergrundmagazins, bei der die Speichermöglichkeit für eine beliebig große Anzahl von Werkzeugen ausgenutzt werden kann.

Die bekannte Werkzeugmaschine ermöglicht damit zum einen den schnellen Werkzeugwechsel mit Hilfe des Maschinenmagazins, wobei aus dem Hintergrundmagazin Werkzeuge aus dem Maschinenmagazin entnommen und neue Werkzeuge in das Maschinenmagazin eingebracht werden können, so dass das Maschinenmagazin sozusagen virtuell auf die Größe des Hintergrundmagazins ausgedehnt wurde.

Bei der bekannten Werkzeugmaschine ist das Maschinenmagazin als Kettenmagazin ausgebildet, das mitfahrend an dem y-Schlitten der als Fahrständermaschine ausgebildeten Werkzeugmaschine angeordnet ist. Dieses Kettenmagazin wird zum Werkzeugwechsel in den Arbeitsraum der Werkzeugmaschine gefahren, wobei es zum Werkzeugaustausch mit dem Hintergrundmagazin in eine Übergabeposition bewegt werden muss.

Obwohl diese Werkzeugmaschine wegen der prinzipiell unbegrenzten Anzahl von Werkzeugen und des schnellen Werkzeugwechsels vielen Anforderungen genügt, ist sie für besonders schnelle Werkzeugwechselzeiten und insbesondere für besonders schnelle Span-zu-Span-Zeiten in vielen Anwendungsfällen doch nicht geeignet.

Die eingangs erwähnte WO 2006/050551 A2 beschreibt eine Werkzeugmaschine, bei der ein Hintergrundmagazin vorgesehen ist, das eine Werkzeugspindel mit Werkzeugen versorgt. Die Übergabe erfolgt über einen als Zwischenspeicher bezeichneten Vierfachgreifer, in dem insgesamt vier Speicherplätze vorgesehen sind. Der Zwischenspeicher kann auch als Kettenelement ausgebildet sein, an dessen Umfang Aufnahmeelemente für Werkzeuge vorgesehene sind.

Vor diesem Hintergrund liegt der vorliegenden Erfindung die Aufgabe zugrunde, eine Werkzeugmaschine der eingangs genannten Art bereitzustellen, bei der prinzipiell eine unbegrenzte Anzahl von Werkzeugen schnell in die zumindest eine Werkzeugspindel eingewechselt werden kann, ohne dass die Bearbeitungszeiten der neuen Werkzeugmaschine bei einem hohen Durchsatz von Werkzeugen beeinträchtigt werden. Ferner soll die neue Werkzeugmaschine konstruktiv einfach aufgebaut sein und einen geringen Platzbedarf aufweisen.

Erfindungsgemäß wird diese Aufgabe mit einer Werkzeugmaschine nach Anspruch 1 gelöst, wobei vorzugsweise das Kettenmagazin an seinem vorderen Ende in einem Arbeitsraum eine Werkzeugwechselposition für die Werkzeugspindel und an seinem hinteren Ende eine Werkzeugaustauschposition für das Hintergrundmagazin bereitstellt.

Die der Erfindung zugrunde liegende Aufgabe wird auf diese Weise vollkommen gelöst.

Auf den ersten Blick erscheint es nicht zielführend, statt eines tatsächlichen Maschinenmagazins, in dem 20, 30 oder 40 Werkzeuge zwischengelagert sind, ein "kleines" Maschinenmagazin einzusetzen, in dem nur drei oder vier Werkzeuge für die oder jede Werkzeugspindel zwischengelagert sind.

Der Erfinder der vorliegenden Anmeldung hat jedoch erkannt, dass es auch bei drei oder vier Werkzeugspeicherplätzen im Maschinenmagazin möglich ist, die theoretisch unbegrenzte Anzahl von Werkzeugen aus dem Hintergrundmagazin für die Werkzeugspindel zur Verfügung zu stellen, und dennoch den schnellen Werkzeugwechsel durch das Zusammenwirken zwischen Maschinenmagazin und Werkzeugspindel beizubehalten.

Der Erfinder der vorliegenden Anmeldung hat nämlich ferner erkannt, dass während der Hauptzeit, während der also die Werkzeugspindel mit dem aktuell eingespannten Werkzeug aus der Werkzeugwechselposition zu dem Werkstück fährt, dieses bearbeitet und dann in die Werkzeugwechselposition zurückfährt, das Maschinenmagazin genügend Zeit hat, um mit dem Hintergrundmagazin den Austausch von einem Werkzeug vorzunehmen.

Es ist nämlich für jeden Arbeitsvorgang lediglich erforderlich, ein bereits benutztes Werkzeug aus dem Maschinenmagazin in das Hintergrundmagazin zu überführen und ein neues Werkzeug aus dem Hintergrundmagazin in das Maschinenmagazin einzulegen.

Während dieser Hauptzeit ist hinreichend Zeit vorhanden, um das Hintergrundmagazin entsprechend zu verfahren, so dass Werkzeuge abgelegt und ausgeschleust werden können.

In dem Maschinenmagazin sind dann nur maximal vier Werkzeuge für die oder jede Werkzeugspindel zwischengelagert, das letzte Werkzeug, das aktuell zum Einsatz kommende Werkzeug und das als nächstes zum Einsatz kommende Werkzeug, wobei entweder das übernächste oder das vorletzte Werkzeug ebenfalls noch gespeichert werden können.

Damit wird ein Austausch eines Werkzeuges an dem Maschinenmagazin während der verglichen mit der Nebenzeit längeren Hauptzeit möglich. Während der Nebenzeit erfolgt nur der Werkzeugwechsel an der Werkzeugspindel.

Der Werkzeugwechsel an der oder den Werkzeugspindeln und der Werkzeugaustausch zu dem Hintergrundmagazin kann zeitgleich erfolgen, wobei der Austausch zwischen dem Maschinenmagazin und dem Hintergrundmagazin spätestens dann beendet sein muss, wenn die oder jede Werkzeugspindel das oder jedes zuletzt verwendete Werkzeug in das Maschinenmagazin abgelegt hat.

Bevorzugt ist es, wenn der Werkzeugwechsel an der oder den Werkzeugspindeln und der Werkzeugwechsel an dem Hintergrundmagazin synchron erfolgen, denn dann lassen sich die Bewegungsabläufe mechanisch koppeln, was den konstruktiven Aufwand und den Steuerungsaufwand verringert.

Von besonderem Vorteil bei der neuen Werkzeugmaschine ist das geringe Gewicht des Maschinenmagazins, denn es muss lediglich vier Speicherplätze für die maximal vier Werkzeuge vorrätig halten.

Bei einem deutlich verringerten Gewicht des Maschinenmagazins ergeben sich verschiedene Zeitvorteile. Zum einen lässt sich das Maschinenmagazin selbst sehr viel schneller schalten, also teilen, die Beschleunigungs- und Bremszeiten sind bei dem geringeren Gewicht deutlich niedriger als bei Maschinenmagazinen, die 20 oder 40 Werkzeuge an entsprechenden Werkzeugspeicherplätzen mitbewegen müssen.

Zum anderen lässt sich aber auch die Werkzeugspindel selbst schneller verfahren, denn die Masse des zumindest in x-Richtung über den Schlitten mitbewegten Maschinenmagazins ist deutlich geringer als im Stand der Technik, so dass auch hier eine bessere Beschleunigung und damit geringere Verfahrzeiten erreichbar sind.

Schließlich ist auch das Einfahren und Ausfahren des Maschinenmagazins an der Werkzeugwechselposition schneller zu realisieren.

Dies führt dazu, dass sowohl die Hauptzeit als auch die Nebenzeit verringert werden, was bei der neuen Werkzeugmaschine zu einem höheren Durchsatz führt.

Ein weiterer Vorteil bei der neuen Werkzeugmaschine ist darin zu sehen, dass sie sehr einfach zu steuern ist. Auf die Reihenfolge der Werkzeuge in dem Maschinenmagazin muss keine besondere Achtung mehr gelegt werden, denn es sind zeitgleich immer nur zwei, drei oder vier Werkzeuge je Werkzeugspindel in dem Maschinenmagazin vorhanden.

Auch die Reihenfolge der Werkzeuge in dem Hintergrundmagazin ist für die Schnelligkeit des gesamten Bearbeitungsprozesses nur noch von untergeordneter Bedeutung, denn während der Hauptzeit hat das Hintergrundmagazin genügend Zeit, das jeweils als nächstes in das Maschinenmagazin einzuwechselnde Werkzeug bereitzustellen.

Selbstverständlich ist es dabei möglich, die Werkzeuge in dem Hintergrundmagazin so abzulegen, dass ihre räumliche Anordnung auch der zeitlichen Abfolge entspricht, in der sie bei dem jeweiligen Prozess verwendet werden sollen.

Dieses Verfahren ist prinzipiell aus dem Stand der Technik bekannt. So beschreibt beispielsweise die DE 43 11 469 A1 ein Verfahren zum Werkzeugwechsel, bei dem neben dem einzuwechselnden Werkzeug eine Leerstelle geschaffen wird, in die das auszuwechselnde Werkzeug abgelegt wird. Die Leerstelle wird dabei dadurch geschaffen, dass ein Werkzeug in einem speziellen Greifer zwischengelagert wird.

Die DE 10 2006 028 A beschreibt eine Weiterentwicklung dieser Werkzeugwechselstrategie, bei der die Werkzeuge beim Zurücklegen in das Maschinenmagazin weitgehend in der Reihenfolge abgelegt werden, in der sie in der zeitlichen Abfolge der Bearbeitung zum Einsatz kommen.

Diese Art der Sortierung der Werkzeuge kann auch bei der neuen Werkzeugmaschine verwendet werden, nur ist es jetzt nicht mehr erforderlich, einen gesonderten Greifer für die Zwischenlagerung von Werkzeugen zu verwenden, die zur Bereitstellung von Leerstellen ausgelagert wurden.

In dem Hintergrundmagazin können nämlich prinzipiell so viele Leerstellen bereitgestellt werden, dass eine entsprechende Sortierung der Werkzeuge in die zeitliche Abfolge während des ersten Durchlaufes bei der Bearbeitung eines neuen Werkstückes sozusagen automatisch erfolgt.

Erfindungsgemäß erhält das Maschinenmagazin somit entweder drei Speicherplätze oder vier Speicherplätze für jede Werkzeugspindel.

In beiden Fällen ist von Vorteil, dass das Schalten oder Teilen der Maschinenmagazine auf ein Minimum beschränkt wird, denn jedes Werkzeug wird in den Speicherplatz wieder abgelegt, aus dem es zuvor von der Werkzeugspindel entnommen wurde.

Insbesondere wenn lediglich drei Speicherplätze für jede Werkzeugspindel vorgesehen sind, ergibt sich noch einmal ein Geschwindigkeitsvorteil, denn statt der vier sind jetzt nur drei mitbewegte Speicherplätze für jede Werkzeugspindel erforderlich, was die bewegte Masse des Maschinenmagazins noch weiter verringert.

Andererseits ist es bevorzugt, wenn das Maschinenmagazin zwei Paare von zwei je in einem ersten Abstand zueinander angeordneten Speicherplätzen für jede Werkzeugspindel aufweist, wobei zwei benachbarte Speicherplätze aus verschiedenen Paaren einen zweiten Abstand zueinander aufweisen, der größer ist als der erste Abstand.

Bei dieser Maßnahme ist von Vorteil, dass zwei in einem Paar benachbarte Speicherplätze dazu verwendet werden, in den ersten Speicherplatz das auszuwechselnde Werkzeug aus der Werkzeugspindel abzugeben und aus dem räumlich nahen zweiten Speicherplatz das neu zu verwendende, aktuelle Werkzeug aufzunehmen.

Das Werkzeugmagazin muss dabei nur eine sehr kurze Strecke verfahren, so dass der Werkzeugwechsel insgesamt sehr schnell erfolgt und die Nebenzeit, die für das Auswechseln der Werkzeuge an der Werkzeugspindel sozusagen unproduktiv verstreicht, noch einmal reduziert werden kann.

Mit anderen Worten, während des Werkzeugwechsels an der Werkzeugspindel wird das Maschinenmagazin über den ersten Abstand und zum Werkzeugaustausch zwischen Maschinenmagazin und Hintergrundmagazin über den längeren zweiten Abstand verfahren.

Wenn der Werkzeugwechsel zwischen Werkzeugspindel und Maschinenmagazin sowie zwischen Maschinenmagazin und Hintergrundmagazin dann zeitgleich erfolgt, stellt das Hintergrundmagazin während der Hauptzeit an der Werkzeugaustauschposition zu dem Maschinenmagazin ein neues Werkzeug bereit.

Das alte Werkzeug ist dabei entweder das als letztes abgelegte Werkzeug oder das als vorletztes abgelegte Werkzeug, wobei das neue Werkzeug das als nächstes zu verwendende Werkzeug oder das als übernächstes zu verwendende Werkzeug ist.

Diese Maßnahmen bringen den bereits erwähnten Vorteil, dass während der Hauptzeit ein neues Werkzeug in dem oder für das Maschinenmagazin bereitgestellt werden kann, so dass während der Nebenzeit ein sehr schneller Wechsel des Werkzeuges an der Werkzeugspindel möglich ist.

Wegen des geringen Gewichtes des Maschinenmagazins kann auch die Hauptzeit noch einmal verringert werden, weil die Werkzeugspindel sehr schnell verfahren werden kann.

Wegen der geringen Anzahl von Werkzeugen in dem Maschinenmagazin reduziert sich zum anderen auch die Nebenzeit, weil der Werkzeugwechsel optimal schnell geplant werden kann.

Allgemein ist es dabei bevorzugt, wenn, das Maschinenmagazin derart gelagert ist, dass es zwischen einer Werkzeugwechselposition, in der Werkzeuge zwischen dem Maschinenmagazin und der Werkzeugspindel gewechselt werden, und einer Werkzeugtauschposition verfahrbar ist, an der Werkzeuge zwischen dem Hintergrundmagazin und dem Maschinenmagazin gewechselt werden.

Bei diesen Maßnahmen, die prinzipiell bereits aus der eingangs erwähnten DE 102 25 143 A1 bekannt sind, ist von Vorteil, dass sie eine so genannte Fahrständermaschine mit vertikaler Werkzeugspindel beschreiben, die von sich aus schon für sehr kurze Werkzeugwechselzeiten und sehr kurze Nebenzeiten sowie optimal kurze Hauptzeiten sorgt.

Es sei noch erwähnt, dass für das Maschinenmagazin bei der neuen Werkzeugmaschine nur ein sehr geringer Platzbedarf besteht, während für das Hintergrundmagazin, das an dem Maschinengestell oder gesondert von dem Maschinengestell aufgebaut sein kann, quasi beliebig viel Platz verfügbar ist. Das Hintergrundmagazin kann beispielsweise als Regalmagazin ausgelegt sein, wobei jede andere Art des Hintergrundmagazins ebenfalls erfindungsgemäß einsetzbar ist.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: in schematischer Seitenansicht die neue Werkzeugmaschine;
- Fig. 2: in schematischer Draufsicht das Zusammenwirken von Werkzeugspindel, Maschinenmagazin und Hintergrundmagazin für ein erstes Ausführungsbeispiel des Maschinenmagazins;
- Fig. 3: die Verfahrensschritte zum Werkzeugwechsel und Werkzeugaustausch bei dem Maschinenmagazin aus Fig. 2;
- Fig. 4: ein zweites Ausführungsbeispiel für ein Maschinenmagazin, in einer Darstellung wie Fig. 2;
- Fig. 5: die einzelnen Schritte bei dem Werkzeugwechsel und Werkzeugaustausch für das Maschinenmagazin aus Fig. 4;
- Fig. 6: ein drittes Ausführungsbeispiel für ein Maschinenmagazin, in einer Darstellung wie in Fig. 2;
- Fig. 7: die einzelnen Schritte für den Werkzeugwechsel und Werkzeugaustausch bei dem Maschinenmagazin aus Fig. 6;
- Fig. 8: ein viertes Ausführungsbeispiel für ein Maschinenmagazin, in einer Darstellung wie Fig. 4; und
- Fig. 9: ein weiteres Ausführungsbeispiel für ein Maschinenmagazin, in einer Darstellung wie Fig. 4.

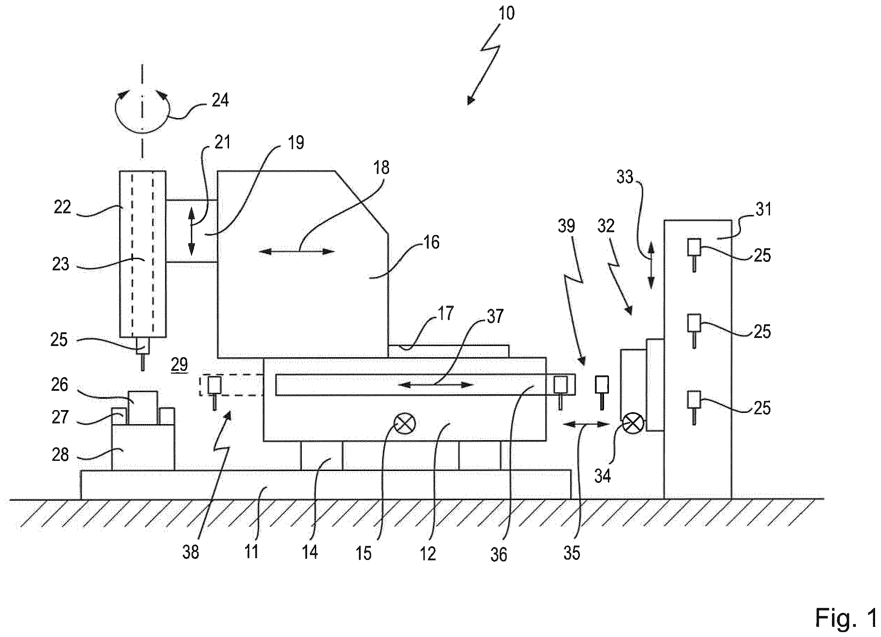

In Fig. 1 ist mit 10 sehr schematisch eine Werkzeugmaschine in Seitenansicht gezeigt. Die Werkzeugmaschine 10 ist eine Fahrständermaschine, bei der auf einem Maschinengestell 11 ein Schlitten 12 angeordnet ist, der auf Führungen 14 in x-Richtung 15 verfahrbar ist.

Auf dem x-Schlitten 12 verfährt ein Fahrständer 16 auf Führungen 17, die sich in y-Richtung 18 erstrecken.

An dem Fahrständer 16 ist ein Schlitten 19 angeordnet, der in z-Richtung 21 verfahrbar, also höhenverstellbar ist.

Der Schlitten 21 trägt einen Spindelkopf 22, in dem zumindest eine Werkzeugspindel 23 in an sich bekannter Weise um eine Drehachse 24 drehbar gelagert ist. Der Spindelkopf kann auch 2 oder 4 Werkzeugspindeln tragen, mit denen dann zwei oder 4 Werkstücke zeit- und konturgleich bearbeitet werden können.

Die Werkzeugspindel 23 weist an ihrem unteren Ende eine übliche Werkzeugaufnahme zum Einspannen eines Werkzeuges 25 auf, mit dem ein Werkstück 26 bearbeitet wird, das in einer Vorrichtung 27 gehalten wird, die auf einem Werkstücktisch 28 im Arbeitsraum 29 angeordnet ist.

Auf diese Weise kann die Werkzeugmaschine 10 mit Hilfe eines Werkzeuges 25 das Werkstück 26 in den drei orthogonalen Raumachsen 15, 18, 21 bearbeiten.

Hinter der Werkzeugmaschine 10 ist getrennt von dem Maschinengestell 11 ein Hintergrundmagazin 31 aufgebaut, in dem zahlreiche Werkzeuge 25 zwischengelagert sind.

Selbstverständlich ist es auch möglich, das Hintergrundmagazin 31 fest mit dem Maschinengestell 11 zu verbinden.

Lediglich der guten Ordnung halber sei erwähnt, dass die Erfindung auch mit einer Werkzeugmaschine realisierbar ist, bei der die oder jede Werkzeugspindel 23 nicht vertikalachsig sondern horizontalachsig ausgerichtet ist, wobei ferner nicht alle drei Bewegungsachsen 15, 18, 21 in dem Werkzeug 25 realisiert sein müssen; zumindest eine Bewegungsachse kann auch in dem Werkstück 26 realisiert sein, wie dies prinzipiell aus dem Stand der Technik bekannt ist.

An dem Hintergrundmagazin 31 ist eine schematisch dargestellte Übergabevorrichtung 32 angeordnet, die in drei Fahrachsen 33, 34, 35, die orthogonal zueinander verlaufen, an dem Hintergrundmagazin 31 verfährt und Werkzeuge in dem Hintergrundmagazin 31 ablegt oder aus dem Hintergrundmagazin 31 entnimmt.

In der gezeigten Darstellung ist das Hintergrundmagazin 31 ein Regalmagazin.

Mit dem Hintergrundmagazin 31 wirkt ein Maschinenmagazin 36 zusammen, das an dem x-Schlitten 12 mitfahrend angeordnet ist. Dieses Maschinenmagazin 36 ist in der durch einen Doppelpfeil 37 angedeuteten Richtung zum einen so verfahrbar, dass es mit seinem vorderen Ende in den Arbeitsraum 29 hineinragt und dort eine Werkzeugwechselposition 38 für die Werkzeugspindel 23 bereitstellt. Die Werkzeugwechselposition 38 ist in Fig. 1 gestrichelt dargestellt.

In der durchgezogen dargestellten Position des Maschinenmagazins 36 befindet es sich mit seinem hinteren Ende in einer Werkzeugaustauschposition 39, in der Werkzeuge 25 zwischen dem Maschinenmagazin 36 und dem Hintergrundmagazin 31 mit Hilfe der Übergabevorrichtung 32 ausgetauscht werden können.

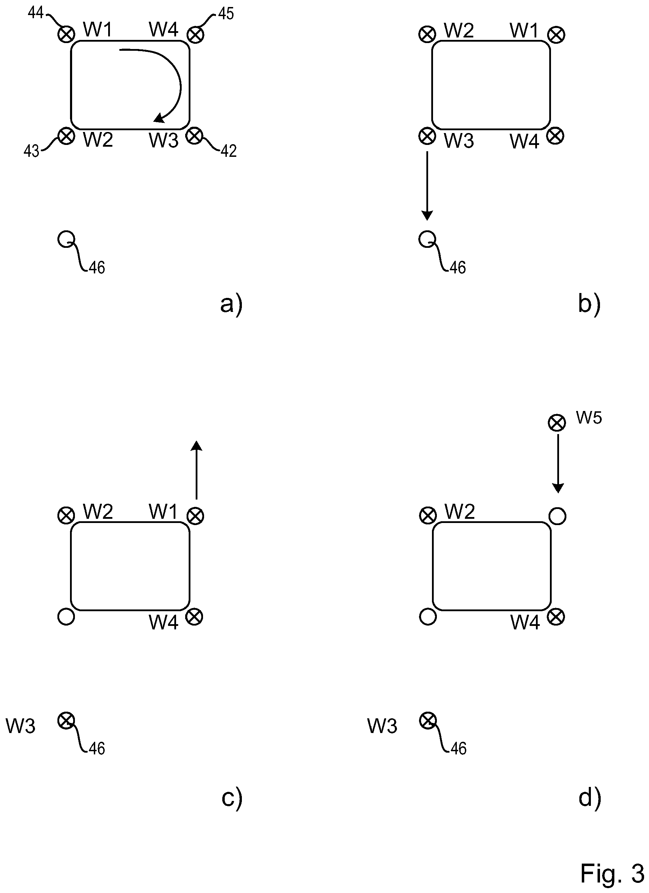

Bei dem Maschinenmagazin 36 in Fig. 3 ist die Anordnung nun so getroffen, dass es drei oder höchstens vier Werkzeuge 25 zwischenspeichern kann, also nur drei oder vier Speicherplätze aufweist.

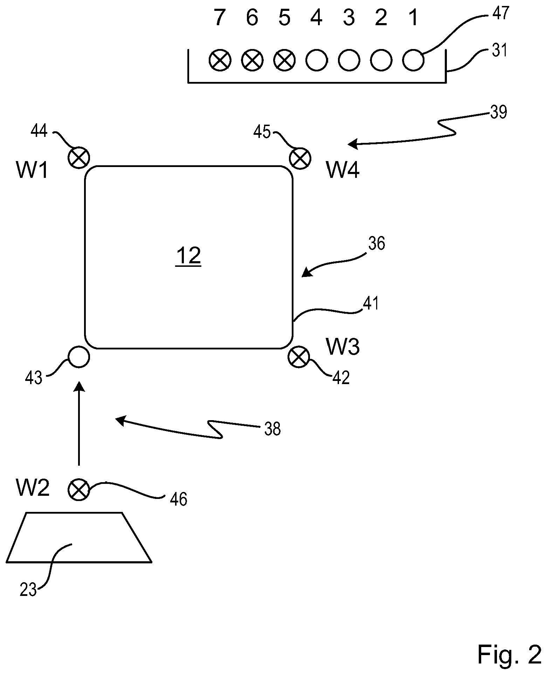

In Fig. 2 ist in Draufsicht und sehr schematisch das Zusammenwirken des Maschinenmagazins 36 mit der Werkzeugspindel 23 einerseits und dem Hintergrundmagazin 31 andererseits gezeigt.

Das Maschinenmagazin 36 ist ein Kettenmagazin mit einer umlaufenden Kette 41, an der vier Speicherplätze 42, 43, 44 und 45 vorgesehen sind.

Die Werkzeugspindel 23 weist in bekannter Weise eine Werkzeugaufnahme 46 auf, in die an der Werkzeugwechselposition 38 Werkzeuge 25 ein- und ausgewechselt werden können.

In dem ebenfalls schematisch dargestellten Hintergrundmagazin 31 sind sieben Speicherplätze 47 für Werkzeuge vorgesehen, wobei die Speicherplätze 1 bis 4 zurzeit leer sind, in den Speicherplätzen 5 bis 7 befinden sich Werkzeuge W5, W6 und W7. Die Werkzeuge W1, W3 und W4 befinden sich in den Speicherplätzen 44, 45 und 42 des Maschinenmagazins 36, während das Werkzeug W2 in die Werkzeugaufnahme 46 eingespannt ist und zur Bearbeitung eines Werkstückes 26 verwendet wurde und jetzt ausgetauscht werden soll.

Selbstverständlich sind die Speicherplätze 47 in dem Hintergrundmagazin 31 nicht zwingend in der zeitlichen Abfolge angeordnet, in der die Werkzeuge 25 der Reihe nach verwendet werden, die chronologische Darstellung ist in Fig. 2 lediglich der Übersichtlichkeit halber gewählt.

In Fig. 3a bis 3d ist jetzt gezeigt, wie das Werkzeug W2 gegen das Werkzeug W3 ausgewechselt und gleichzeitig das Werkzeug W1 in das Hintergrundmagazin 31 zurückgeführt und dafür das Werkzeug W5 in das Maschinenmagazin 36 eingelegt wird.

In Fig. 3a ist zu erkennen, dass zunächst das Werkzeug W2 aus der Werkzeugaufnahme 46 in den Speicherplatz 43 eingelegt wurde.

Danach teilt sich das Maschinenmagazin 31. Die Speicherplätze 42, 43, 44, 45 werden also im Uhrzeigersinn um eine Position weitergefahren, so dass sich die Situation in der Fig. 3b ergibt.

Als nächstes wird jetzt das Werkzeug W3 in die Werkzeugaufnahme 46 überführt, so dass sich die Situation der Fig. 3c ergibt. Danach wird das Werkzeug W1 aus dem Speicherplatz 45 entnommen und in das Hintergrundmagazin 31 überführt; siehe Fig. 3c.

Als letztes wird das neue Werkzeug W5 aus dem Regalmagazin 31 in den Speicherplatz 44 eingelegt; sieh Fig. 3d.

Somit ergibt sich jetzt in Fig. 3d eine vergleichbare Situation wie in Fig. 2, nur ist jetzt das Werkzeug W3 das aktuell im Einsatz befindliche Werkzeug, während das Werkzeug W2 als nächstes in dem Hintergrundmagazin 31 abgelegt wird, aus dem dann das Werkzeug W6 entnommen wird.

Das Werkzeug W4 wird als nächstes verwendet, während das Werkzeug W5 als übernächstes verwendet wird.

Bei dem insoweit beschriebenen Verfahren zum Werkzeugwechsel ist insbesondere von Vorteil, dass das Maschinenmagazin 31 nur wenige Schaltbewegungen durchführen muss, denn jedes Werkzeug wird genau dort von der Werkzeugspindel 23 wieder abgelegt, wo es aufgenommen wurde.

Ferner ergeben sich die bereits erwähnten Vorteile, dass nämlich nur eine sehr geringe Anzahl von Speicherplätzen 42, 43, 33 und 45 bereitgehalten werden muss, so dass sowohl das Schalten des Maschinenmagazins 36 als auch die Bewegung des y-Schlittens 12 sehr schnell vonstatten geht.

Die Verfahrensschritte, die von Fig. 2 über Fig. 3a und Fig. 3b zu Fig. 3c geführt haben, sind so genannte Nebenzeit, während der keine Bearbeitung eines Werkstückes möglich ist.

Während des Auswechselns des Werkzeuges W1 und des Einwechselns des Werkzeuges W5, wie es in den Fig. 3c und 3d dargestellt ist, kann die Werkzeugspindel 23 jedoch mit dem Werkzeug W3 ein Werkstück bearbeiten, dies ist die so genannte Hauptzeit.

Die Schritte in Fig. 3b) und 3c) sowie die Schritte in Fig. 2 und 3d) können auch zeitgleich erfolgen, insbesondere dann, wenn der Werkzeugwechsel an der Werkzeugwechselposition 38 und der Werkzeugaustauschposition 39 mechanisch synchronisiert wird.

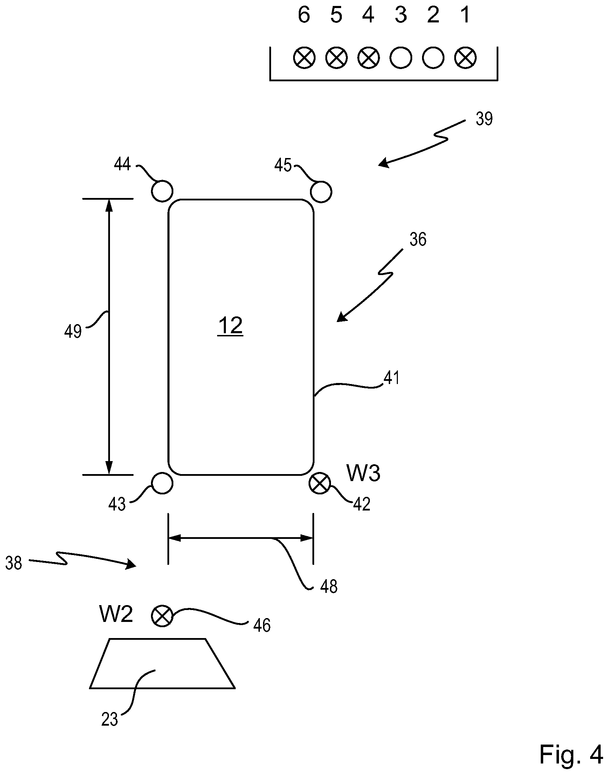

In Fig. 4 ist ein Maschinenmagazin 36 gezeigt, das ebenfalls vier Speicherplätze 42, 43, 44 und 45 aufweist. Während bei dem Werkzeugmagazin 36 aus Fig. 2 in der Kette 41 benachbarte Speicherplätze 42, 43, 44, 45 zueinander gleiche Abstände aufweisen, sind bei dem Werkzeugmagazin 36 aus Fig. 4 zwei Paare von Speicherplätzen 42, 43 sowie 44, 45 vorgesehen, in denen die Speicherplätze 42 und 43 bzw. 44 und 45 zueinander einen geringen Abstand 48 aufweisen, während in verschiedenen Paaren befindliche, in der Kette 41 benachbarte Werkzeuge, also 43 und 44 sowie 45 und 42, zueinander einen größeren Abstand 49 aufweisen.

Diese asymmetrische Anordnung des Maschinenmagazins 36 lässt sich insbesondere bei einem Kettenmagazin realisieren, wenn nämlich jeweils zwei in der Kette 41 benachbarte Speicherplätze 42; 43 bzw. 44; 45 sehr eng nebeneinander liegen, aber zu dem in der Kette 41 diametral gegenüberliegenden Paar 44; 45 bzw. 42; 43 einen sehr viel größeren Abstand 49 aufweisen.

Der Abstand 48 überspannt dann beispielsweise den minimalen Abstand, den zwei Speicherplätze in einer Kette 41 haben müssen, während der Abstand 49 die Distanz von dem Arbeitsraum 29 zu dem Hintergrundmagazin 31 überspannt.

Wenn jetzt beispielsweise der Speicherplatz 42 in die Position des Speicherplatzes 43 gefahren werden soll, ist nur eine sehr kurze Fahrstrecke und damit extrem schnelles Verfahren erforderlich, während für den Fall, dass der Speicherplatz 43 in die Position des Speicherplatzes 44 verfahren werden muss, sehr viel mehr Fahrzeit erforderlich ist.

Vor diesem Hintergrund wird das Überbrücken des Abstandes 48 während der Nebenzeit genutzt, um extrem kurze Werkzeugwechselzeiten zu realisieren, während das Überbrücken des Abstandes 49 während der Hauptzeit erfolgt, während der also die Werkzeugspindel 23 mit dem eingespannten Werkzeug W2 ein Werkstück bearbeitet.

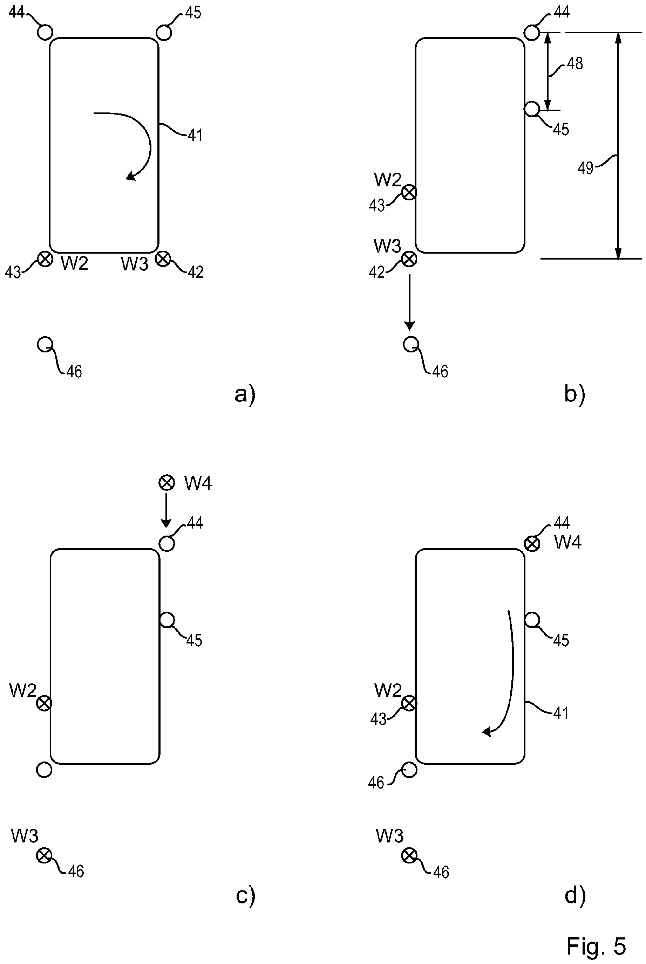

In Fig. 4 ist eine vergleichbare Ausgangsposition wie in Fig. 2 gezeigt, so dass als erstes das Werkzeug W2 aus der Werkzeugaufnahme 46 in dem Speicherplatz 43 abgelegt ist, wie es in Fig. 5a zu sehen ist. Allerdings ist nur ein nächstes Werkzeug W3 in der Kette 41 zwischengelagert.

Danach schaltet das Maschinenmagazin 36 die Kette 41 um die Distanz 48 weiter, so dass sich die Situation in Fig. 5b ergibt, in der sich jetzt der leere Speicherplatz 44 an der Werkzeugaustauschposition 39 befindet, wie ein Vergleich mit Fig. 4 zeigt.

Gleichzeitig ist das als nächstes zu verwendende Werkzeug W3 in die Werkzeugwechselposition 38 verschoben worden, so dass es jetzt in die Werkzeugaufnahme 46 eingewechselt werden kann, wie es in Fig. 5c zu sehen ist.

Sobald der Zustand gemäß Fig. 5c erreicht ist, kann die Werkzeugspindel 23 mit dem Werkstück W3 das Werkstück bearbeiten, während jetzt hauptzeitparallel das Werkzeug W4 in den Speicherplatz 44 eingelegt wird, wie es in Fig. 5d zu sehen ist.

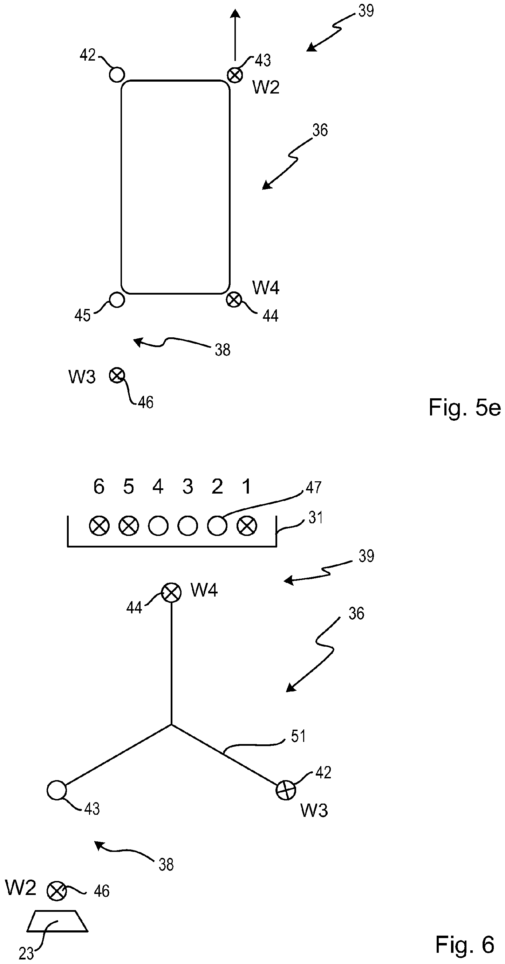

Danach schaltet das Werkzeugmagazin erneut, bis wieder die vier Eckpunkte des Rechteckes mit Speicherplätzen belegt sind. Diese Situation ist in Fig. 5e gezeigt, wo der leere Speicherplatz 45 in der Werkzeugwechselposition 38 ist, so dass er als nächstes das Werkzeug W3 aus der Werkzeugaufnahme 46 entnehmen kann.

Direkt daneben, also in dem kurzen Abstand 48, befindet sich das Werkzeug W4, das als nächstes eingesetzt werden soll. In der Werkzeugaustauschposition 39 befindet sich der Speicherplatz 43 mit dem Werkzeug W2, das jetzt aus dem Maschinenmagazin 36 entnommen wird.

Im Gegensatz zu dem Maschinenmagazin 36 aus Fig. 2 befinden sich bei dem Maschinenmagazin 36 aus Fig. 4 gleichzeitig nicht vier sondern höchstens zwei Werkzeuge in der Kette 41, was ebenfalls zu einer Gewichtsreduzierung und damit zu einer schnelleren Verfahrmöglichkeit beiträgt.

Dennoch benötigt auch das Werkzeugmagazin 36 aus Fig. 4 insgesamt vier Speicherplätze 42, 43, 44 und 45, es sind jedoch höchstens zwei benachbarte Speicherplätze 42, 43, 44, 45 mit einem Werkzeug 25 belegt.

Die Nebenzeit liegt hier in den Schritten gemäß Fig. 5a und Fig. 5b. Wegen des kurzen Verfahrweges über die Strecke 48 ist die Nebenzeit hier extrem kurz.

In Fig. 6 ist in einer Darstellung wie Fig. 2 und Fig. 4 ein weiteres Werkzeugmagazin 36 gezeigt, das nur drei Speicherplätze 42, 43 und 44 aufweist. Das Maschinenmagazin 36 kann zwar mit einem Teller 51 ausgerüstet sein, ist aber erfindungsgemäß durch eine Kette realisiert.

Fig. 6 zeigt, wie die Fig. 2 und 4, die Relation zwischen dem Maschinenmagazin 36 sowie der Werkzeugspindel 43 an der Werkzeugwechselposition 38 und dem Hintergrundmagazin 31 an der Werkzeugaustauschposition 39.

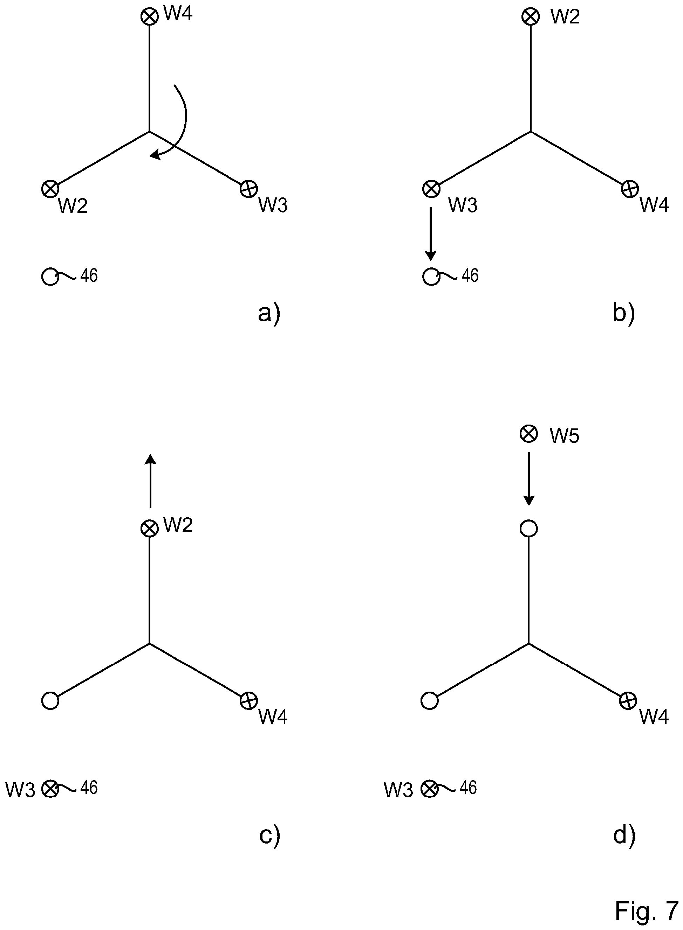

In Fig. 7 ist in vier Schritten der Werkzeugwechsel gezeigt, der ähnlich verläuft wie bei dem Werkzeugmagazin aus Fig. 2, nur dass jetzt maximal immer nur drei Werkzeuge im Werkzeugmagazin vorhanden sind.

Zunächst wird das Werkzeug W2 in den leeren Speicherplatz 43 eingelegt, so dass die Situation der Fig. 7a entsteht. Danach wird das Maschinenmagazin 36 um einen Schritt weitergedreht, so dass die Situation der Fig. 7b entsteht, wo das neue Werkzeug W3 jetzt in der Werkzeugwechselposition 38 ist, während das alte Werkzeug W2 sich in der Werkzeugaustauschposition 39 befindet. Das Werkzeug W4 ist das übernächste Werkzeug, das benutzt werden soll.

Das Werkzeug W3 wird jetzt in die Werkzeugaufnahme 46 eingespannt, so dass sich die Situation der Fig. 7c ergibt, woraufhin das Werkzeug W2 durch das Werkzeug W5 ausgetauscht wird, wie es in Fig. 7d zu erkennen ist. Danach ergibt sich die Situation der Fig. 6, nur dass jetzt der Speicherplatz 42 als leerer Speicherplatz in der Werkzeugwechselposition 38 liegt, während der Speicherplatz 43 in der Werkzeugaustauschposition 39 liegt und bereits das neue Werkzeug W5 aufgenommen hat.

Abschließend sei noch erwähnt, dass in den Fig. 2 bis 7 nicht gezeigt ist, ob das Maschinenmagazin 36 zwischen dem Werkzeugwechsel an der Werkzeugwechselposition 38 und dem Werkzeugaustausch an der Werkzeugaustauschposition 39 in Richtung des Pfeils 37 aus Fig. 1 verfahren werden muss oder nicht.

Für den Fall, dass das Maschinenmagazin 36 nicht verfahren werden muss, kann ein Werkzeugwechsel an der Werkzeugwechselposition 38 sowie ein Werkzeugaustausch an der Werkzeugaustauschposition 39 zumindest teilweise auch zeitgleich erfolgen, was die Nebenzeit weiter reduzieren kann.

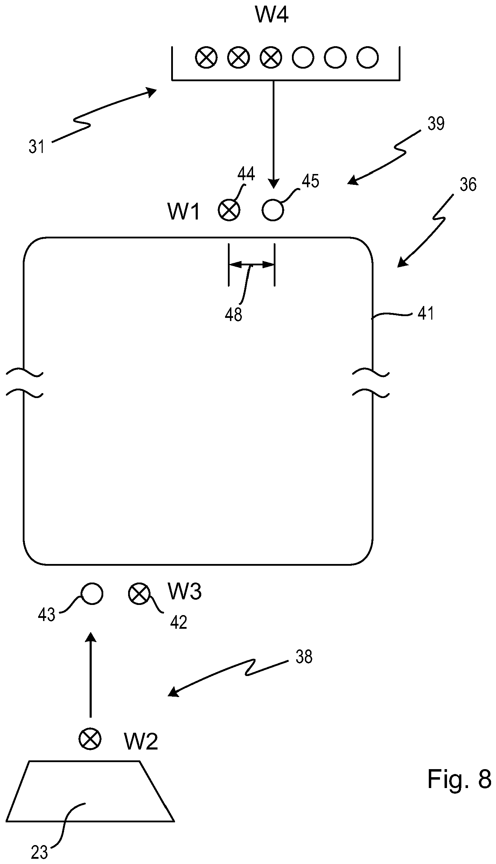

Das Maschinenmagazin 36 aus Fig. 4 kann auch so angeordnet sein, dass die in dem geringen Abstand 48 zueinander angeordneten Speicherplätze 42, 43 und 44, 45 nicht in den Umlenkecken der Kette 41 liegen sondern dazwischen, also so, wie es in Fig. 8 gezeigt ist.

In der Ausgangsposition der Fig. 8 befindet sich die Werkzeugspindel 23 mit dem zuletzt verwendeten Werkzeug W2 in der Werkzeugwechselposition 38 und das Maschinenmagazin 36 mit dem schon zuvor ausgewechselten Werkzeug W1 in der Werkzeugaustauschposition 39.

In einem ersten Schritt werden jetzt zeitgleich die Werkzeuge W2 und W4 in den Speicherplätzen 43 und 45 des Maschinenmagazins 36 abgelegt. Danach verfährt das Maschinenmagazin 36 um den Abstand 48, so dass sich nun die Speicherplätze 42 und 44 in der Werkzeugwechselposition 38 bzw. der Werkzeugaustauschposition 39 befinden.

Zeitgleich werden dann das Werkzeug W3 in die Werkzeugspindel 23 und das Werkzeug W1 in den zuvor von dem Werkzeug W4 besetzen und nun leeren Speicherplatz in dem Hintergrundmagazin 31 überführt.

Jetzt beginnt die Hauptzeit, während der die Werkzeugspindel 23 mit dem Werkzeug W3 ein Werkstück bearbeitet. Zeitgleich verfährt das Hintergrundmagazin 31 das Werkzeug W5 in die Werkzeugaustauschposition 39.

Wenn die Werkzeugspindel 23 jetzt wieder die Werkzeugwechselposition 38 anfährt, befindet sich die Werkzeugmaschine wieder in der Verfahrenssituation gemäß Fig. 8.

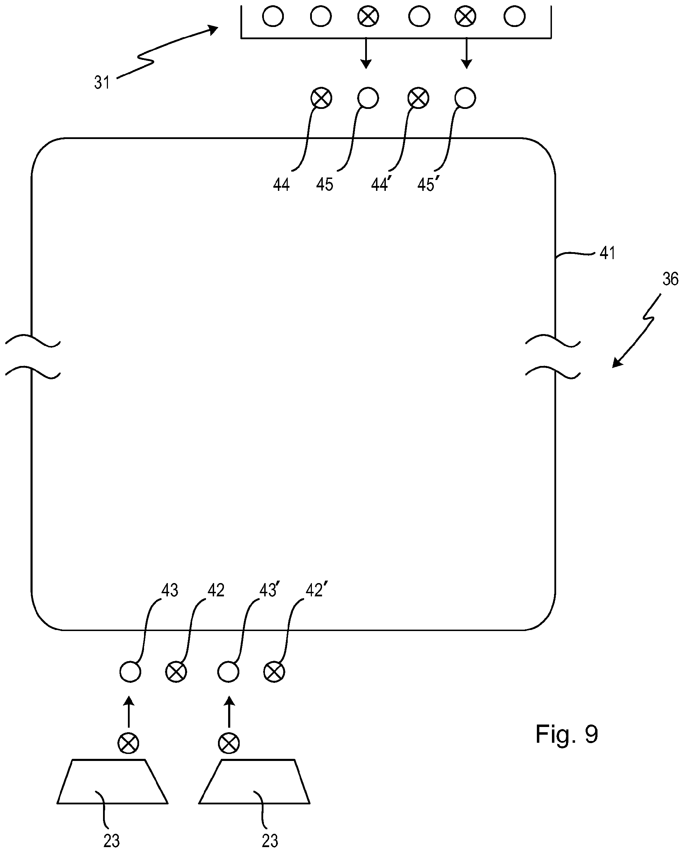

Wenn die Werkzeugmaschine mit zwei Werkzeugspindeln 23, 23' ausgestattet ist, sind in dem Maschinenmagazin 36 folglich 2 mal 4 Speicherplätze vorgesehen, wie es in Fig. 9 gezeigt ist.

Abgesehen von der Tatsache, dass jetzt sowohl an den Werkzeugspindeln 23, 23' als auch an dem Hintergrundmagazin 31 immer zwei Werkzeuge gewechselt werden, unterscheiden sich die mit Mehrspindelmaschinen durchführbaren Werkzeugwechselverfahren nicht von den oben beschriebenen Verfahren.

Die Speicherplätze 43, 42, 43' und 42' sowie die Speicherplätze 44, 45, 44' und 45' haben zueinander in der jeweiligen Gruppe den gleichen Abstand, der dem doppelten Abstand zwischen den Werkzeugspindeln 23, 23' entspricht.

## Patentansprüche

1. Werkzeugmaschine mit zumindest einer gegenüber einer Vorrichtung (27) zum Halten von Werkstücken (26) relativ in zumindest einer von drei Raumrichtungen (15, 18, 21) verfahrbaren Werkzeugspindel (23, 23'), in die Werkzeuge (25; W1-W7) zur Bearbeitung der Werkstücke (26) einspannbar sind, mit einem Maschinenmagazin (36), in dem zum Einwechseln in die zumindest eine Werkzeugspindel (23, 23') vorgesehene Werkzeuge (25; W1-W7) vorrätig gehalten werden, und mit einem Hintergrundmagazin (31), in dem zum Einwechseln in das Maschinenmagazin (36) vorgesehene Werkzeuge (25; W1-W7) vorrätig gehalten werden, wobei das Maschinenmagazin (36) ein Kettenmagazin mit einer Kette (41) ist, an der die Speicherplätze (42, 43, 44, 45) angeordnet sind,
und wobei die Werkzeugmaschine einen in einer ersten Raumrichtung (15) verfahrbaren Schlitten (12) aufweist, auf dem ein in einer zweiten Raumrichtung (18) verfahrbarer Ständer (16) gelagert ist, an dem ein in einer dritten Raumrichtung (21) verfahrbarer Spindelkopf (22) gelagert ist, in dem drehbar die oder jede Werkzeugspindel (23, 23') gelagert ist, und das Maschinenmagazin (36) an dem Schlitten (12) gelagert ist,
**dadurch gekennzeichnet, dass** in dem Maschinenmagazin (36) für die oder jede Werkzeugspindel (23, 23') nicht mehr als vier Speicherplätze (42, 43, 44, 45) zur Aufnahme von Werkzeugen (25; W1-W7) vorgesehen sind.

2. Werkzeugmaschine nach Anspruch 1, **dadurch gekennzeichnet, dass** das Kettenmagazin an seinem vorderen Ende in einem Arbeitsraum (29) eine Werkzeugwechselposition (38) für die Werkzeugspindel (23, 23') und an seinem hinteren Ende eine Werkzeugaustauschposition (38) für das Hintergrundmagazin (31) bereitstellt.

3. Werkzeugmaschine nach Anspruch 1 oder 2, **dadurch gekennzeichnet, dass** in dem Maschinenmagazin (36) drei Speicherplätze (42, 43, 44) zur Aufnahme von Werkzeugen (25; W1-W7) vorgesehen sind.

4. Werkzeugmaschine nach Anspruch 1 oder 2, **dadurch gekennzeichnet, dass** in dem Maschinenmagazin (36) vier Speicherplätze (42, 43, 44, 45) zur Aufnahme von Werkzeugen (25; W1-W7) vorgesehen sind.

5. Werkzeugmaschine nach Anspruch 4, **dadurch gekennzeichnet, dass** das Maschinenmagazin (36) zwei Paare (42, 43; 44, 45) von je zwei in einem ersten Abstand (48) zueinander angeordneten Speicherplätzen (42, 43; 44, 45) für die oder jede Werkzeugspindel (23, 23') aufweist, wobei zwei benachbarte Speicherplätze (43, 44; 45, 42) aus verschiedenen Paaren einen zweiten Abstand (49) zueinander aufweisen, der größer ist als der erste Abstand (48).

6. Werkzeugmaschine nach einem der Ansprüchel bis 5, **dadurch gekennzeichnet, dass** das Maschinenmagazin (36) derart gelagert ist, dass es zwischen einer Werkzeugwechselposition (38), in der Werkzeuge (25; W1-W7) zwischen dem Maschinenmagazin (36) und der Werkzeugspindel (23) gewechselt werden, und einer Werkzeugaustauschposition (39) verfahrbar ist, an der Werkzeuge (25; W1-W7) zwischen dem Hintergrundmagazin (31) und dem Maschinenmagazin (36) gewechselt werden.

## Claims

1. Machine tool having at least one tool spindle (23, 23') which is displaceable in relation to a device (27) for holding workpieces (26) in at least one of three spatial directions (15, 18, 21) and in which tools (25; W1-W7) for machining the workpieces (26) can be chucked, having a machine magazine (36) in which tools (25; W1-W7) provided for exchange into the at least one tool spindle (23, 23') are kept in store, and a background magazine (31) in which tools (25; W1-W7) provided for exchange into the machine magazine (36) are kept in store, wherein the machine magazine (36) is a chain magazine having a chain (41) on which the storage places (42, 43, 44, 45) are arranged, and wherein the machine tool has a slide (12) which is displaceable in a first spatial direction (15) and on which a column (16) which is displaceable in a second spatial direction (18) is mounted, and on which column (16) a spindle head (22) which is displaceable in a third spatial direction (21) is mounted, wherein the or each tool spindle (23, 23') is rotatably mounted in said spindle head (22), and wherein the machine magazine (36) is mounted on the slide (12),
**characterized in that** in the machine magazine (36) no more than four storage places (42, 43, 44, 45) for accommodating tools (25; W1-W7) are provided for the or each tool spindle (23, 23').

2. Machine tool according to Claim 1, **characterized in that** the chain magazine provides on its front end in a working space (29) a tool-change position (38) for the tool spindle (23, 23'), and on its rear end a tool-swap position (39) for the background magazine (31).

3. Machine tool according to Claim 1 or 2, **characterized in that** three storage places (42, 43, 44) for accommodating tools (25: W1-W7) are provided in the machine magazine (36).

4. Machine tool according to Claim 1 or 2, **characterized in that** four storage places (42, 43, 44, 45) for accommodating tools (25; W1-W7) are provided in the machine magazine (36).

5. Machine tool according to Claim 4, **characterized in that** the machine magazine (36) has for the or each tool spindle (23, 23') two pairs (42, 43; 44, 45) of two storage places (42, 43; 44, 45), which are each spaced apart from one another at a first distance (48), wherein two adjacent storage places (43, 44; 45, 42) of different pairs are spaced apart from one another at a second distance (49) which is larger than the first distance (48).

6. Machine tool according to any one of Claims 1 to 5, **characterized in that** the machine magazine (36) is mounted in such a manner that it is displaceable between a tool-change position (38), in which tools (25; W1-W7) are exchanged between the machine magazine (36) and the tool spindle (23), and a tool-swap position (39), in which tools (25; W1-W7) are exchanged between the background magazine (31) and the machine magazine (36).

## Revendications

1. Machine-outil avec au moins une broche porte-outil (23, 23') déplaçable par rapport à un dispositif (27) pour maintenir des pièces (26) dans au moins une de trois directions de l'espace (15, 18, 21), dans laquelle des outils (25; W1-W7) pour l'usinage des pièces (26) peuvent être montés, avec un magasin de machine (36), dans lequel des outils (25; W1-W7) prévus pour le changement dans ladite au moins une broche porte-outil (23, 23') sont conservés en réserve, et avec un magasin d'arrière-plan (31), dans lequel des outils (25; W1-W7) prévus pour l'échange dans le magasin de machine (36) sont conservés en réserve, dans laquelle le magasin de machine (36) est un magasin à chaîne avec une chaîne (41), sur laquelle les postes de stockage (42, 43, 44, 45) sont disposés, et dans laquelle la machine-outil présente un chariot (12) déplaçable dans une première direction de l'espace (15), sur lequel est montée une cage (16) déplaçable dans une deuxième direction de l'espace (18), sur laquelle est montée une tête porte-broche (22) déplaçable dans une troisième direction de l'espace (21), dans laquelle la ou chaque broche porte-outil (23, 23') est montée de façon rotative, et le magasin de machine (36) est monté sur le chariot (12), **caractérisée en ce qu'**il est prévu dans le magasin de machine (36) pour la ou chaque broche porte-outil (23, 23') pas plus de quatre postes de stockage (42, 43, 44, 45) destinés à recevoir des outils (25; W1-W7).

2. Machine-outil selon la revendication 1, **caractérisée en ce que** le magasin à chaîne procure à son extrémité avant dans une chambre de travail (29) une position de changement d'outil (38) pour la broche porte-outil (23, 23') et à son extrémité arrière une position d'échange d'outil (38) pour le magasin d'arrière-plan (31).

3. Machine-outil selon une revendication 1 ou 2, **caractérisée en ce qu'**il est prévu dans le magasin de machine (36) trois postes de stockage (42, 43, 44) destinés à recevoir des outils (25; W1-W7).

4. Machine-outil selon une revendication 1 ou 2, **caractérisée en ce qu'**il est prévu dans le magasin de machine (36) quatre postes de stockage (42, 43, 44, 45) destinés à recevoir des outils (25; W1-W7).

5. Machine-outil selon la revendication 4, **caractérisée en ce que** le magasin de machine (36) présente deux paires (42, 43; 44, 45) de chaque fois deux postes de stockage (42, 43; 44, 45) disposés à une première distance l'un de l'autre (48) pour la ou chaque broche porte-outil (23, 23'), dans laquelle deux postes de stockage voisins (43, 44; 45, 42) de paires différentes présentent une deuxième distance l'un de l'autre (49), qui est plus grande que la première distance (48).

6. Machine-outil selon l'une quelconque des revendications 1 à 5, **caractérisée en ce que** le magasin de machine (36) est monté de telle manière qu'il puisse être déplacé entre une position de changement d'outil (38), dans laquelle des outils (25; W1-W7) sont échangés entre le magasin de machine (36) et la broche porte-outil (23), et une position d'échange d'outil (39), dans laquelle des outils (25; W1-W7) sont échangés entre le magasin d'arrière-plan (31) et le magasin de machine (36).
